# EUROPEAN PATENT APPLICATION

(11) **EP 3 208 732 A1**
(43) Date of publication of application: **23.08.2017**
(21) Application number: 17156576.5
(22) Date of filing: 16.02.2017
(51) Int. Cl.: G06F 21/43, H04L 29/06, G06F 21/35

(54) **METHOD AND SYSTEM FOR AUTHENTICATION**

(30) Priority: 19.02.2016 GB 201602969
(71) Applicant: Intercede Limited, Lutterworth, Leicestershire LE17 4PS (GB)
(72) Inventor: EDWARDS, Christopher, Nottingham, Wollaton NG8 1FR (GB)
(74) Representative: Wallis, Helen Frances Mary

(57) **Abstract**

Described herein is a method of authentication between a mobile device and a service provider server. The method enables a session to be established between a computing device and the service provider server without a user having to enter any user account data on either the computing device or the mobile device. To establish a session, the session identifier is presented in machine readable form by the computing device to the mobile device and then, in response to a user authenticating with the mobile device, a credential embodying an anonymised user identifier is sent in a tamper-proof manner to the service provider service along with the session identifier. The service provider server can extract the anonymised user identifier from the credential and use it to identify the user's data and authorise the session. A method of obtaining the credential is also described.

## Description

### Background

Authentication is normally required in situations where a user uses a computing device to log into cloud services and websites. Authentication is typically achieved through requiring the user to input a username and a password on the computing device being used. An increasing number of services have also started to add additional security checking measures, such as sending a one-time password via SMS to the user's mobile phone and requesting the user to input the one-time password into the browser.

However, the user may have to remember and type complex sets of username and password, possibly different for different service providers. This is not very secure, since usernames and passwords provided by the user to the browser can be leaked, stolen or phished.

For the SMS message solution to work, the user has to be within coverage of a mobile network. The user also has to wait for an SMS with a one-time password, and has the burden of typing the one-time password into the browser. SMS messages can also be intercepted and/or substituted by third parties. In addition, the SMS message solution only works for devices that support SMS functionality, such as mobile phones, and is not applicable to computing devices without SMS functionality, such as tablets.

The embodiments described below provide alternative techniques for authentication. The embodiments described below are not limited to implementations which solve any or all of the disadvantages of the known techniques.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Described herein is a method of authentication between a mobile device and a service provider server. The method enables a session to be established between a computing device and the service provider server without a user having to enter any user account data on either the computing device or the mobile device. To establish a session, the session identifier is presented in machine readable form by the computing device to the mobile device and then, in response to a user authenticating with the mobile device, a credential embodying an anonymised user identifier is sent in a tamper-proof manner to the service provider service along with the session identifier. The service provider server can extract the anonymised user identifier from the credential and use it to identify the user's data and authorise the session. A method of obtaining the credential is also described.

A first aspect provides a method for authentication, comprising: receiving, at a service provider server from a computing device, a request for a session; generating, at the service provider server, an identifier for the session; sending, by the service provider server to the computing device, the identifier for the session; receiving, at the service provider server from a mobile device, a credential embodying an anonymised user identifier and the identifier for the session; obtaining, by the service provider server, the anonymised user identifier from the credential; determining, by the service provider server, if the anonymised user identifier is associated with a user record accessible to the service provider server, and authorizing, by the service provider server, the session, in response to determining that the anonymised user identifier is associated with a user record.

A second aspect provides a method for authentication, comprising: obtaining, by a mobile device from a computing device, an identifier for a session to be established between the computing device and a service provider server; receiving activation information from a user; determining, by the mobile device, if the received activation information matches pre-recorded activation information available to the mobile device; and in response to determining that the received activation information matches the pre-recorded activation information, sending, by the mobile device to the service provider server, the identifier for the session and a credential embodying an anonymised user identifier.

A third aspect provides a method for facilitating generation of a credential, comprising: receiving, at a service provider server from a mobile device, an instruction requesting generation of a credential for a user, wherein the request comprises information for identifying the user; generating, by the service provider server, an anonymised user identifier and storing an association between the anonymised user identifier and user data; sending, by the service provider server to a credential server, the anonymised user identifier; receiving, at the service provider server from the credential server, a request identifier, wherein the request identifier is generated by the credential server in response to receiving the anonymised user identifier and wherein the credential server stores an association between the anonymised user identifier and the request identifier; and sending, by the service provider to the mobile device, the request identifier.

A fourth aspect provides a method for requesting generation of a credential, comprising: sending, by a mobile device to a service provider server, an instruction requesting generation of a credential, wherein the instruction comprises information for identifying a user; receiving, by the mobile device from the service provider server, a request identifier; sending, by the mobile device to a credential server, a data packet comprising the request identifier, wherein the data packet is digitally signed using a cryptographic key stored on the mobile device; and receiving, by the mobile device from the credential server, a credential embodying an anonymised user identifier and storing the credential on the mobile device.

A fifth aspect provides a method for generating a credential, comprising: receiving, at a credential server from a service provider server, an anonymised user identifier; generating, by the credential server, a request identifier and temporarily storing a mapping between the request identifier and the anonymised user identifier; sending, by the credential server to the service provider server, the request identifier; receiving, at the credential server from a mobile device, a digitally signed data packet comprising the request identifier; verifying, by the credential server, the data packet and in response to successful verification, identifying a corresponding anonymised user identifier based on a stored mapping, generating a credential embodying the anonymised user identifier and sending the credential to the mobile device.

A sixth aspect provides a service provider server comprising a processor and a memory arranged to store device executable instructions which when executed by the processor, cause the processor to: generate, in response to receiving an instruction requesting generation of a credential for a user from a mobile device, an anonymised user identifier, wherein the request comprises information for identifying the user; store an association between the anonymised user identifier and user data; send, to a credential server, the anonymised user identifier; and send, in response to receiving a request identifier from the credential server, the request identifier to the mobile device, wherein the request identifier is generated by the credential server in response to receiving the anonymised user identifier and wherein the credential server stores an association between the anonymised user identifier and the request identifier.

A seventh aspect provides a service provider server comprising a processor and a memory arranged to store device executable instructions which when executed by the processor, cause the processor to: generate, in response to receiving a request for a session from a computing device, an identifier for the session; send to the computing device, the identifier for the session; obtain, in response to receiving the identifier for the session and a credential from a mobile device, an anonymised user identifier from the credential; determine if the anonymised user identifier is associated with a user record accessible to the service provider server, and in response to determining that the anonymised user identifier is associated with a user record, authorize the session.

An eighth aspect provides a credential server comprising a processor and a memory arranged to store device executable instructions which when executed by the processor, cause the processor to: generate, in response to receiving an anonymised user identifier, a request identifier; temporarily store a mapping between the request identifier and the anonymised user identifier; send the request identifier to the service provider server; verify, in response to receiving a digitally signed data packet comprising the request identifier from a mobile device, the data packet; and in response to successful verification, identify a corresponding anonymised user identifier based on a stored mapping, generate a credential embodying the anonymised user identifier and send the credential to the mobile device.

A ninth aspect provides a mobile device comprising a processor and a memory arranged to store device executable instructions which when executed by the processor, cause the processor to: send to a service provider server, an instruction requesting generation of a credential, wherein the instruction comprises information for identifying a user; send, in response to receiving a request identifier from the service provider server, a data packet to a credential server, wherein the data packet comprises the request identifier and is digitally signed using a cryptographic key stored on the mobile device; and store, in response to receiving a credential embodying an anonymised user identifier from the credential server, the credential on the mobile device.

A tenth aspect provides a mobile device comprising a processor and a memory arranged to store device executable instructions which when executed by the processor, cause the processor to: obtain from a computing device, an identifier for a session to be established between the computing device and a service provider server; determine, in response to receiving activation information from a user, if the received activation information matches pre-recorded activation information available to the mobile device; and in response to determining that the received activation information matches the pre-recorded activation information, send to the service provider server, the identifier for the session and a credential embodying an anonymised user identifier.

An eleventh aspect provides a system comprising a service provider server as described herein, a credential server as described herein and optionally a mobile device as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards, etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a schematic diagram of an example system in which a new credential may be created and used for authorization;
Figure 2 is a signal flow diagram illustrating an example method for creating a new credential;
Figure 3 is a signal flow diagram illustrating an example method of authentication;
Figure 4 shows an exemplary computing-based device for use in the system described herein.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

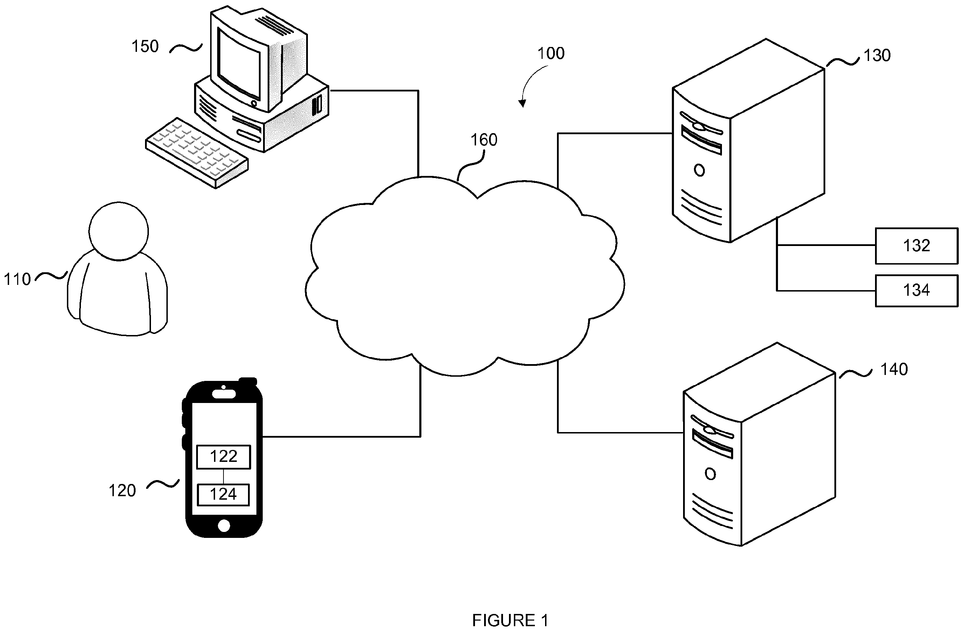

Figure 1 illustrates a system 100 in which a new credential can be created and used for authorization according to the various examples described herein. The system 100 comprises a user 110, a mobile device 120, a service provider server 130, a credential server 140, a computing device 150 and a one or more communication networks 160.

The user 110 may be a possessor of the mobile device 120 i.e. a person to whom the mobile device belongs or is assigned. However, the various examples described herein are not limited in this respect. The user 110 may be, for example, an administrator of the mobile device 120, such as a person responsible within an organisation for ensuring that the mobile device 120 has any necessary data stored thereon for use by one or more other persons.

The mobile device 120 may be any type of mobile device. In particular, although not exclusively, the mobile device 120 may be any of a mobile telephone, a smart phone, personal digital assistant, tablet computer, or the like. In some examples, the mobile device 120 may include a software module or application (also called an applet or "App") 122. The application 122 is referred to hereafter as an Authenticator App, as it may be used during creation of an authentication credential and may also be used during authentication processes. The Authenticator App 122 may be an application, which is stored on the mobile device 120 prior to executing a method according to an example described herein. For example, the Authenticator App 122 may be downloaded to the mobile device 120 from the service provider server 130 or from another source, such as from an application store or other repository of applications.

The Authenticator App 122 may have access to a secure storage area 124. The secure storage area 124 may be configured to store an address of the credential service server 140 and also store other information necessary for performing the methods according to the various examples, such as cryptographic keys and/or certificates (which may be referred to as authentication certificates or credential certificates) generated for use in authentication. The secure storage area 124 may be provided as part of the operating system on the mobile device and may be a secure keystore, encrypted file or database. The secure storage area 124 may alternatively be maintained within a removable secure storage element which is inserted into the mobile device (but is not part of the mobile device) such as the SIM or a secure memory card (e.g. a secure micro SD card).

The service provider server 130 may be any type of computer system capable of implementing a method of authentication as described herein. Although the service provider server 130 is shown in Figure 1 as a single computer, this is merely for illustration and the server computer 130 may comprise a plurality of computer systems and/or a computer system having multiple processors etc. The service provider server 130 is communicatively coupled to the mobile device 120 and the computing device 150 to authenticate the user 110 via the mobile device 120 and the computing device 150 as will be explained. The service provider server 130 is communicatively coupled to the credential server 140 and is able to communicate authentication related security information with the credential server 140.

The service provider server 130 may comprise an authentication module 132, which may be hardware, software and/or firmware able to instruct the service provider server 130 to perform authentication related functions, such as facilitating generation of an authentication credential and authenticating a session requested by computing device 150.

The service provider server 130 may also comprise or have access to one or more storage devices 134, such as memories. In some examples, the storage device 134 may store data representing user information and authentication related information for one or more users of the system 100. In some examples the user information may comprise user identification information, such as a user's name and contact details, and/or user account information, such as an account username, a password and/or financial account details associated with the user 110. The user account information may be available exclusively to the service provider server 130. The user information may also include, in some examples, mobile device identification information (MDID). The MDID may be any information which helps identify the mobile device 130, such as a telephone number for a Subscriber Identity Module (SIM) card of the mobile device 120.

The credential server 140 may be any type of computer system capable of implementing a method of authentication as described herein. Although the credential server 140 is shown in Figure 1 as a single computer, this is merely for illustration and the credential server 130 may comprise a plurality of computer systems and/or a computer system having multiple processors etc. The service provider server 130 is communicatively coupled to the service provider server 130 and the mobile device 120 for creating a credential for the user 110 as will be described below.

The computing device 150 may be a desktop PC, a laptop, a tablet or any other computing device. The computing device 150 may, for example, be a shared computing device provided in a public environment, such as an internet café or a library. Personal details and security information provided by the user 110 to the computing device 150 can be insecure since they are prone to leakage, theft or phishing by third parties having access to the computing device 150 (e.g. directly or via malicious software running on the computing device 150).

The communication network 160 shown in Figure 1 may be a single entity or may comprise a plurality of communication networks. For example, it is envisaged that the computing device 150 may communicate with the service provider server 130 via one or more computer networks, such as over an IP protocol, whilst the mobile device 120 may communicate data with the service provider server 130 and credential server 140, at least partly, over a mobile communication network, such as a network employing GPRS, GSM, 3G standards such as UMTS, 4G standards such as LTE-Advanced, mobile WiMAX (IEEE 802.16e-2005) standards and/or the like.

The methods according to embodiments of the present invention comprise at least a first method for creating credential and a second method for using the created credential for authentication.

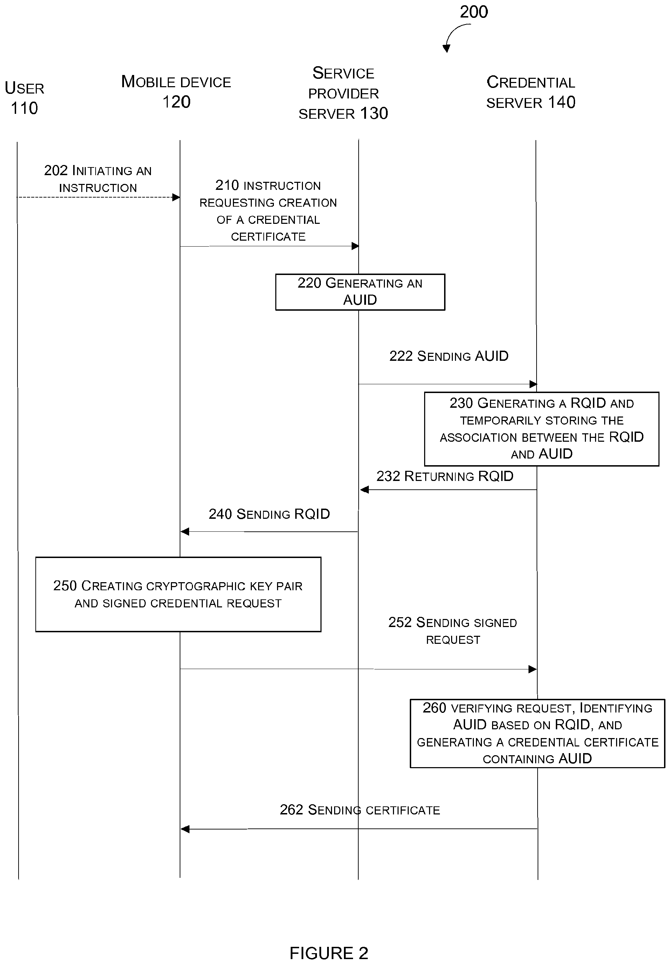

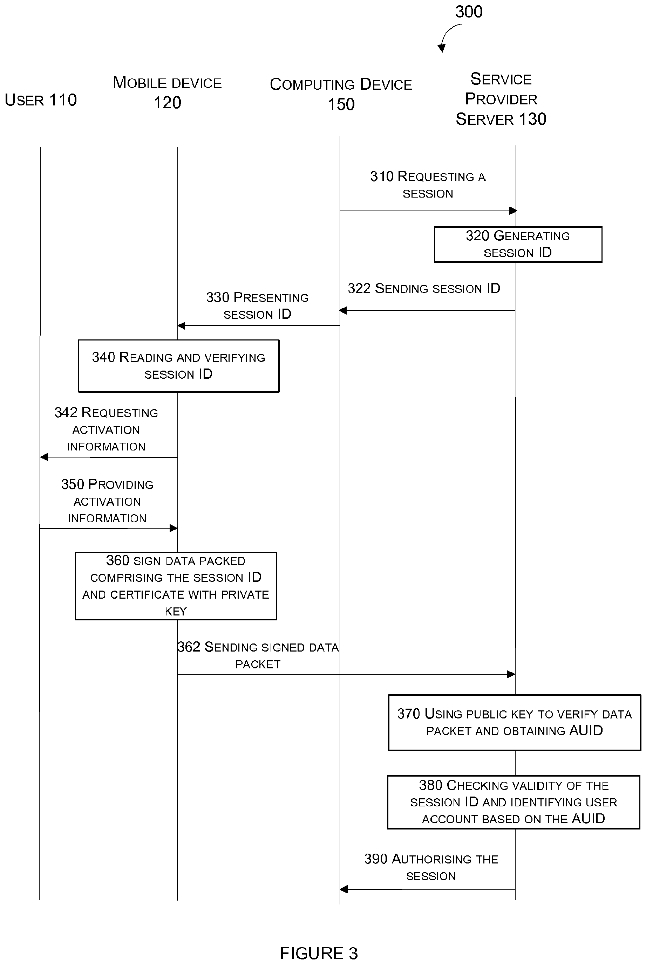

Figure 2 is a signal flow diagram illustrating a method 200 for creating a new credential according to various examples. More specifically, it illustrates a method for creating, by the credential server 140 under the command of the service provider server 130, a credential certificate for use by the mobile device 120. The credential certificate may be used by the mobile device 120 in a subsequent authorization process as will be described with reference to Figure 3.

The method 200 may include generation of a unique, anonymised user Identifier (AUID), which is associated with a user's identity or account by the service provider server 130 (and where the association between the user's identity / account and the unique anonymised user ID is known only to the service provider server), and generation of a unique, random request Identifier (RQID), which is associated with the AUID, by the credential server 140. The AUID and RQID may be randomly generated identifiers and may be generated in any way and have any form. The generated RQID is then sent to the mobile device 120 by the service provider server 130. The Authenticator App 122 then instructs the mobile device 120 to generate a cryptographic key pair (i.e. a public key and a private key). The private key is used to digitally sign a data packet containing the RQID and the public key. The mobile device 120 subsequently sends this signed data packet to the credential server 140, so that the credential server 140 can generate a credential certificate containing, representing or otherwise allowing derivation of the AUID. The credential server 140 returns this certificate to the mobile device 140, which stores it for future use.

An AUID is associated with a user's identity or account such that only the service provider server 130 can identify a user's identity or account based on its corresponding AUID. A RQID is associated with an AUID such that the credential server 140 can identify an AUID based on an associated RQID. A credential certificate embodies an AUID such that the service provider server 130 can obtain the AUID from the credential certificate, for example by extracting or deriving the AUID from the certificate.

There may be a plurality of credential certificates associated with a single AUID. For example, a user may have a plurality of mobile devices, each of which may generate and store its own credential certificate. The credential certificates for these mobile devices may be all associated with the same AUID held by the service provider server 130 and associated with a single user's account.

The method 200 will be described in more detail below with reference to Figure 2.

The Authenticator App 122 may instruct the mobile device 120 to send an instruction to the service provider server 130 to request the creation of a credential certificate (arrow 210). This instruction may be generated automatically by the Authenticator App 122 in response to a user's input (as shown in by optional arrow 202) or in response to any other event that may trigger the generation of the instruction. The instruction may comprise data that would allow the service provider server 130 to identify the user 110 and/or the user's account. The instruction may be made to a website, platform or application provided by the service provider server 130. Alternatively, the service provider server 130 itself, or any other component under the control of the service provider 130 or a third party trusted by the service provider, may instigate the credential request without prior instruction from the user 110 or the Authenticator App 122 (e.g. arrows 202 and 210 may be omitted).

In response to the instruction, the authentication module 132 on the service provider server 130 may identify the user 110 and/or the user's account based on the request and generate an AUID for the user (block 220). In various examples, only the authentication module 132 on service provider can use the user's AUID to identify the user 110 and/or the user's account, and no other third party in the possession of the AUID can use it to identify the user 110 and/or the user's account. The service provider server 130 may also store the AUID and its correspondence with the user's identity or account into e.g. the storage device 134.

The authentication module 132 instructs the service provider server 130 to send the AUID to the credential server 140 (arrow 222). In response to receiving the AUID, the credential server 140 generates an RQID and associates this with the AUID (block 230). There may be a one-to-many correspondence between the AUID and RQID (i.e. there may be multiple RQIDs which are associated with the same AUID). The credential server 140 temporarily stores the AUID, the RQID and the correspondence between them and returns the generated RQID to the service provider server 130 (arrow 232).

The service provider server 130 transmits the RQID to the mobile device 120 (arrow 240) and the RQID is then available to the Authenticator App 122 and may be stored in the secure storage area 124.

In response to receipt of the RQID, the Authenticator App 122 generates a cryptographic key pair, which includes a public key and a private key, and creates a credential request. The request comprises the public key (e.g. it may be a PKCS#10 format block of data which includes the public key) and this is combined with the RQID before it is digitally signed with the private key (block 250). The private key is kept by the mobile device and the public key may be made available to a recipient device of a data packet digitally signed by the private key, such that the recipient device may use the public key to verify the integrity and authenticity of the data packet (where the data packet may, for example, be the request described above). The cryptographic key pair may be stored in the secure storage area 124 or any other secure storage area. The use of the private key may be protected, such that it requires user's activation, e.g. in the form of the user presenting a PIN or fingerprint, etc. to the mobile device 120 whenever the private key is used.

The Authenticator App instructs the mobile device 120 to send the digitally signed data packet (i.e. the request comprising the RQID and the public key, all signed using the private key) to the credential server 140 (arrow 252). The mobile device 120 may send them via the network 160 directly to the credential server 140, without sending them via the service provider server 130.

In response to receiving the signed request (including the public key, the credential server 140 verifies the request with the public key and extracts the RQID from the request (block 260). Then the credential server 140 identifies the AUID corresponding to the RQID (as described above, the AUID was temporarily stored at the credential server 140 in block 230). The credential server 140 then generates a credential certificate that contains or represents the AUID or otherwise allows derivation of the AUID. In various examples, the credential certificate may be an X.509 digital certificate according to the International Telecommunication Union - Telecommunication Standardization Sector (ITU-T) standard. The credential certificate may alternatively be in any other suitable format.

The credential server 140 may also send the received public key to the service provider server 130 for storage, at e.g. storage device 134. The service provider server 130 may also store a correspondence between the user's identity and the public key. The service provider server 130 can subsequently use the public key to verify the integrity and authenticity any data packets signed by the corresponding private key received from mobile device 120 at a later stage.

Optionally (in block 260), the credential server 140 may check the validity of the received credential request (e.g. in addition to verifying the integrity and authenticity of the data packet). This validity check may include determining if the credential request is received within a predetermined time period, e.g. a time period starting from the generation of the RQID by the credential server 140 (in block 230) or from the returning of the RQID by the credential server 140 (arrow 232).

The credential server 140 sends the generated credential certificate to the mobile device 120 (arrow 262). The mobile device 120 may then store the credential certificate in the secure storage area 124 (or any other data storage location, as the certificate is considered to be public data and so does not need to be stored in a secure storage location) for later use.

Once the mobile device 120 receives the credential certificate according to the method of Figure 2, the mobile device 120 can be used as an authenticator to authenticate a browser or an application on computing device 150 connecting to a cloud service or a website of the service provider server 130 as will be explained below with reference to Figure 3.

In various examples, the certificate (as generated in block 260) may have a limited lifetime, and when the certificate stored on the mobile device 120 approaches the end of its lifetime (e.g. as it approaches its expiry date and time), the Authentication App 122 may instruct the mobile device 120 to send an instruction to the service provider server 130 requesting renewal of the certificate and consequently the method 200 may be substantially repeated.

According to another example, the method 200 above may be modified such that instead of receiving the certificate from the credential server 140, the mobile device 120 may receive the certificate from a third party (not shown in the drawings) trusted by the credential server 140. For example, instead of generating the certificate as described above (in block 260), the first credential server 140 may instruct a trusted third party to generate a certificate and to send the generated certificate to the mobile device 120.

Figure 3 is a signal flow diagram illustrating an example method 300 of authentication. This method of authentication uses a certificate stored on a mobile device and this certificate may have been provided to the mobile device using the method 200 described above or an alternative method.

The authorization method 300 may comprise the service provider server 130 sending a unique session identifier (session ID) to the computing device requesting a session, the mobile device 120 reading the unique session identifier and requesting access to the private key from the user 110 and then the mobile device providing the session ID to the service provider server 130 in a secure, tamper-proof manner. In various examples this may comprise the mobile device signing the session identifier with the private key and sending it with the credential certificate to the service provider server 130. Alternatively, the mobile device may create a secured, client-certificate authenticated connection to the service provider server 130 through the use of transport layer security, the private key and the credential certificate on the phone. The mobile device 120 then sends the session identifier previously obtained from the phone to the service provider server 130 via this secure connection.

In various examples, before providing the session ID to the service provider server 139, the mobile device 120 may also request that the user 110 confirm the session requested (e.g. by displaying a message to the user explaining the session for which authorization is requested).

The method 300 avoids the need for the user 110 to input personal and/or account information, such as username and password, into the computing device 150, which is not exclusively used by the user 110. This greatly reduces the risk of leakage and theft of the user's personal and account information to third parties having access to the computing device. In the examples, during authentication, the user 110 only needs to provide security information to the user's mobile device 120 and does not need to provide security information to the computing device 150 or any other devices. Additionally, the user does not need to input and/or account information which relates specifically to the service provider, such as username and password, into the mobile device 120, but instead the user authenticates to the mobile device 120 using biometric data (e.g. a fingerprint) or PIN which may be used more generally.

The method 300 will be described in more detail below with reference to Figure 3.

When the user 110 attempts to access a webpage, information and/or a service provided by the service provider server 130 from a web browser or software application on the computing device 150, the computing device 150 may send a request to service provider server 130 (arrow 310). Such a request may be a request for establishing a session with the service provider server 130, such as a request for accessing a website / webpage provided by the service provider server 130, a request for certain data or information from the service provider server 130, or a request for a function or a service provided by the service provider server 130, for example a request for a financial transaction to be performed. Although the method for Figure 3 is described below in the context of the computing device 150 requesting a session to be established between the computing device 150 and the service provider server 130, the method also applies to the situations where the computing device 150 requests provision of any data, application or service from the service provider server 130.

The computing device may be any shared computing device provided in a public environment, such as an internet café or a library, or any other computing device (e.g. a computing device in a user's workplace or home). If the user 110 provides any personal and security information to the computing device 150, the information may not be held securely since it is prone to leakage, theft or phishing by third parties having access to the computing device 150 either directly or through malicious software running on the computing device 150.

In response to the request for a session from the computing device 150, the authentication module may instruct the service provider server 130 to generate a unique session identifier (session ID), which is a random identifier uniquely assigned for this session (block 320). The session ID may also include specific message content to describe the precise action requested by the computing device 150. The service provider server 130 then sends the generated session ID to the computing device 150 (arrow 322).

Upon receipt of the session ID, the computing device 150 may present the session ID in machine readable form (e.g. as a visual code, such as a QR code or barcode), for example by displaying the machine readable session ID on its screen or by making the session ID available through another communication medium such as Near Field Communication (NFC) or Bluetooth™ (arrow 330).

The user 110 runs the Authenticator App 122 on the mobile device 120, which then instructs the mobile device 120 to read the machine readable session ID (block 340). This may be performed, for example by launching a camera on the mobile device 120 to capture the displayed machine readable session ID if the session ID is a QR code or barcode, or by using a NFC reader or short-range wireless (e.g. Bluetooth™) receiver to receive the session ID if the session ID is made available via NFC or Bluetooth™. After the machine readable session ID is read by the mobile device 120, the Authenticator App 122 may verify the content of the session ID, such as verifying the session ID is from a known service provider. For example, if the session ID is a QR code or barcode, the QR code or barcode may contain a JavaScript Object Notation (JSON) structure with fields that could represent the service provider server 130, the action requested and any other message for the user. Optionally, the Authenticator App 122 may instruct the mobile device 140 to display the action / session being authorized to the user and ask the user to confirm the action / session requested. For example, the mobile phone may display and ask the user 110 to authorize a specific financial transaction.

Following receipt of the session ID (and following any verification and/or user authorization, where this is implemented), the Authenticator App 122 may instruct the mobile device 120 to request the user 110 to provide activation information for activating the use of a private key (arrow 342), where this private key may be the private key generated in method 200 (in block 250). The activation information may be a PIN, a fingerprint or any other suitable information, which can be used to check the user's identity and grant the mobile phone access to the private key.

In response to receiving the activation information from the user 110 (arrow 350), the Authenticator App 122 retrieves the private key from the secure storage area 124 using the received activation information and uses the private key to send the certificate and session ID in a secure, tamper-proof manner to the service provider server 130.

In various examples this may comprise the authenticator app 122 digitally signing a data packet comprising the session ID, a credential certificate and optionally any other information obtained from the computing device 150 (block 360). The credential certificate may be the certificate received and stored in the mobile device 120 in method 200 (arrow 262). The Authenticator App 122 then instructs the mobile device 120 to send the digitally signed data packet to the service provider server 130 (arrow 362). In response to receiving the digitally signed data packet from the mobile device 120, the service provider server 130 uses a public key, which forms a cryptographic key pair with the private key used to sign the certificate, to verify the integrity and authenticity of the data packet and obtains an AUID from the enclosed credential certificate (block 370). The public key may be the public key made available to the service provider server 130 by the credential server 140 in the method of Figure 2.

In other examples, the certificate may be used in establishing a secure communication channel between the mobile device 120 and the service provider server 130. For example, the Authentication App 122 may instruct the mobile device 120 to establish the secure communication channel with the service provider server 130. The secure communication channel may be established under a cryptographic protocol such as the Secure Sockets Layer (SSL) protocol and the Transport Layer Security (TLS) protocol. In the process of establishing the secure channel, the service provider server 130 may require mutual authentication and request a certificate and signature from the mobile device 120 for this purpose. Other steps may also be performed in accordance with the standard mutual SSL protocol. The Authentication App 122 may then instruct the mobile device 120 to send the session ID and optionally any other data obtained from the computing device 150 to the service provider server 130 over the secure communication channel. In response, the service provider server 130 may validate the session ID and extract an AUID from the received authentication certificate.

The service provider server 130 checks the validity of the session ID which it has received. This may be performed by the service provider server 130 using the certificate to validate the digital signature (which was signed using the private key) and hence to establish the authenticity and integrity of the session ID and any other data that was transmitted either within the same signed data packet (in first example described above) or over the secure channel that was authenticated using the certificate (in the second example described above). If it is determined that the received session ID is valid, the service provider server 130 identifies a user account associated with the AUID (block 380).

In response to identifying a user account (in block 380), the authentication module 132 instructs the service provider server 130 to authorize the session to the computing device 150 (arrow 390). The session to be authorized may be identified by the session ID received from the service provider server 130 from the mobile device 120. This authorization may allow the user 110 to use a software application / web browser on the computing device 150 to access the webpage, information, application and/or service requested in step 310. Enabling the computer-server session may be performed through the issuance of an authorization token (e.g. using the Security Assertion Markup Language (SAML) or the Open Standard for Authorization (OAUTH)).

Optionally, in step 370 the service provider server 130 also checks a validity of the authorization request, which may include for example checking whether the current location of the mobile device is the same as the location of the computing device and/or the same as a designated location, such as the location where the mobile device is normally located. The location of the mobile device and the location of the computing device may be determined based on their IP addresses and/or based on other location data available to the mobile device (e.g. GPS data or cell tower data) which may be provided to the service provider server with the session ID (arrow 362). The service provider server 130 may only authorize the session if it is determined that the location of the mobile device satisfies one or more of these predetermined conditions.

In further examples, the method 300 may be modified such that instead of the computing device 150 submitting a request for a session to the service provider server 130, the mobile device 120 may be used to submit the request for a session using the credential certificate stored in it. In response to the request, the service provider server 130 sends the session ID to the mobile device 120, possibly as a QR code. The mobile device 120 may then forward the session ID to the computing device 140. The computing device 140 can then use the session ID to establish a session with the service provider server 130.

Although in the above examples, the credential server 140 is described as a server separate from the service provider server 130, it will be appreciated that the credential server 140 may be a part of the service provider server 130 or may be a dedicated server which is controlled by the service provider or any other trusted party. It will also be appreciated that the function of the credential server 140 may be implemented by a software module, a hardware module, and/or a firmware installed on the service provider server 130.

The authorization method according to the above examples avoids the need for the user 110 to input personal and/or account information, such as username and password, into the computing device 150, which may not be exclusively used by the user 110. This greatly reduces the risk of leaking the user's personal and/or account information to anyone who subsequently uses the computing device, reduces the risk of theft of the information by malware installed on the computing device and reduces the risk of the information being intercepted during its transmission to the service provider server 130. In the examples, the user 110 only provides security information to the user's mobile device 120, for example by inputting a PIN or a fingerprint to the mobile device 120, and does not need to provide such security information to any other devices which may cause leakage or theft of the security information. Additionally, as described above, a user does not need to input to the mobile device 120 any user identity information (e.g. username and password) which is specific to the service provider.

In the above methods, a unique credential certificate may be generated for and used by each service provider 130, and a unique cryptographic key pair may be generated for and used by each service provider 130. The exclusive use of the credential certificate and cryptographic key pairs for a single service provider provide a high level of security.

A dedicated certification authority, such as the credential server 140, may be associated with and exclusively used by each service provider server 130 to minimize the risk of leakage of security information stored in the credential server 140 to any other service provider.

The credential certificate may contain no personally identifiable information, such that even if the certificate is made available to a third party, the third party cannot obtain any personal identity or account information from the certificate. Only the service provider server 130 is able to obtain a user's account information based on a corresponding AUID in the credential certificate.

The methods according to the examples also allow the use of the credential certificate to be easily revoked in the event that the certificate is no longer in use. Effective revocation of the credential certificate can be carried out solely by the service provider server 130, for example by breaking the correspondence between an AUID and its corresponding credential certificate. This avoids the overhead of searching and maintaining Certificate Revocation Lists and allows for faster validation of the authentication credentials when they are presented.

The methods according to the various examples also combine much higher security with greatly enhanced ease of use. Users have a consistent authentication experience across multiple service providers without having to remember different usernames, passwords and other data.

In addition, the methods described here do not require involvement of any third party during the authentication, which reduces complexity and hence increases performance and reliability.

The methods described above use existing communications standards and protocols in a novel way, so that it can be applied immediately to existing systems without significant re-engineering or standardization activities.

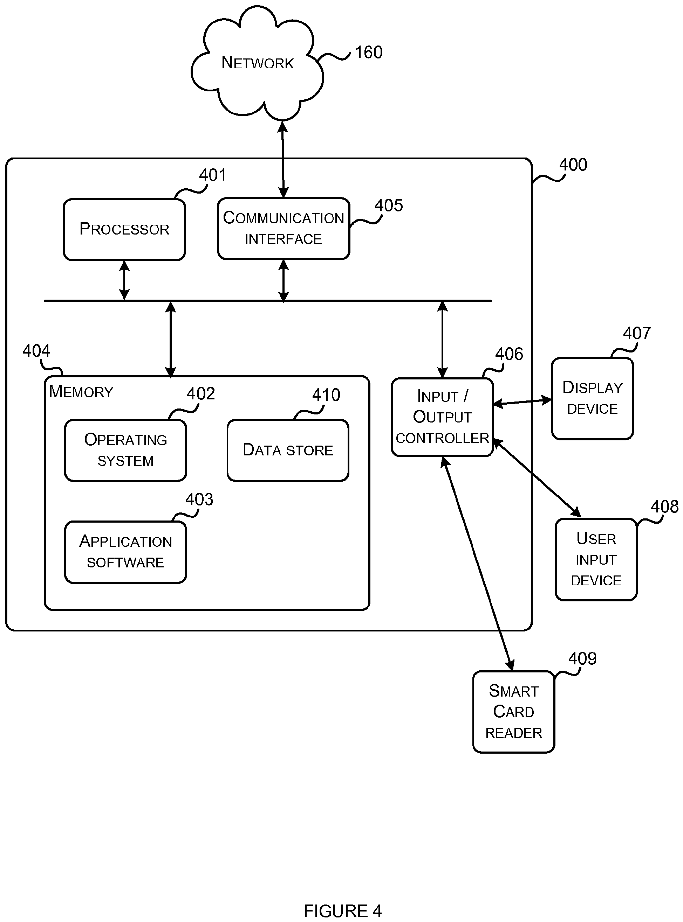

FIG. 4 illustrates various components of an exemplary computing-based device which may be implemented as any form of a computing and/or electronic device, and in which examples described above may be implemented. For example, any of the mobile device 120, the computing device 150, the service provider server 130 and credential server 140 may be provided by computing-based devices in accordance with, or similar or related to, the exemplary device 400.

Computing-based device 400 comprises one or more processors 401 which may be microprocessors, controllers or any other suitable type of processors for processing computer executable instructions to control the operation of the device in order to perform at least a part of the methods of Figures 2 and 3. In some examples, for example where a system on a chip architecture is used, the processors 401 may include one or more fixed function blocks (also referred to as accelerators) which implement a part of the methods of either or both Figures 2 and 3 in hardware (rather than software or firmware). Platform software comprising an operating system 402 or any other suitable platform software may be provided at the computing-based device to enable application software 403 to be executed on the device.

The computer executable instructions may be provided using any computer-readable media that is accessible by computing based device 400. Computer-readable media may include, for example, computer storage media such as memory 410 and communications media. Computer storage media, such as memory 410, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 410) is shown within the computing-based device 400 it will be appreciated that the storage may be distributed or located remotely and accessed via a network or other communication link (e.g. using communication interface 405).

The computing-based device 400 also comprises an input/output controller 406 arranged to output display information to a display device 407 which may be separate from or integral to the computing-based device 400. The display information may provide a graphical user interface. The input/output controller 406 is also arranged to receive and process input from one or more devices, such as a user input device 408 (e.g. a mouse or a keyboard). In an example the display device 400 may also act as the user input device 408 if it is a touch sensitive display device. The input/output controller 406 may also output data to devices other than the display device, e.g. a locally connected printing device (not shown in Figure 4).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

A first further example provides a method for authentication, comprising: receiving, at a service provider server from a computing device, a request for a session generating, at the service provider server, an identifier for the session; sending, by the service provider server to the computing device, the identifier for the session; receiving, at the service provider server from a mobile device, a credential embodying an anonymised user identifier and the identifier for the session; obtaining, by the service provider server, the anonymised user identifier from the credential; determining, by the service provider server, if the anonymised user identifier is associated with a user record accessible to the service provider server, and authorizing, by the service provider server, the session, in response to determining that the anonymised user identifier is associated with a user record.

The session that is authorized may be linked to the user record.

The request for a session may comprise at least one of a request for provision of data, a request for logging into an account, a request for opening a webpage, and a request for using an application or service provided by the service provider server.

Determining if the anonymised user identifier is associated with a user record accessible to the service provider server may comprise determining, by the service provider server, if the anonymised user identifier is associated with a user account, a record of the mobile device and/or a cryptography key generated by the mobile device.

The first further example may further comprise determining, by the service provider server, a location of the mobile device; and said step of authorizing the session is only performed by the service provider server, if it is determined that the location of the mobile device meets at least one predetermined condition. The at least one predetermined condition may comprise at least one of the location of the mobile device being the same as the location of the computing device and the location of the mobile device being within a designated area.

The first further example may further comprise receiving, at the service provider server from a mobile device, a credential embodying an anonymised user identifier and the identifier for the session comprises: receiving, at the service provider server from a mobile device, a signed data packet comprising the credential embodying the anonymised user identifier and the identifier for the session.

The first further example may further comprise verifying the data packet using a stored cryptographic key associated with the anonymised user identifier.

The receiving, at the service provider server from a mobile device, a credential embodying an anonymised user identifier and the identifier for the session may comprise setting up, by the service provider with the mobile device, a secure communication channel using the credential embodying the anonymised user identifier; and receiving, by the service provider server from the mobile device, the identifier for the session over the secure communication channel.

A second further example provides a method for authentication, comprising: obtaining, by a mobile device from a computing device, an identifier for a session to be established between the computing device and a service provider server; receiving activation information from a user; determining, by the mobile device, if the received activation information matches pre-recorded activation information available to the mobile device; and in response to determining that the received activation information matches the pre-recorded activation information, sending, by the mobile device to the service provider server, the identifier for the session and a credential embodying an anonymised user identifier.

The obtaining by the mobile device an identifier for a session may comprise: capturing, by a camera of the mobile device, a visual code displayed by the computing device, and obtaining, by the mobile device, the identifier for the session from the visual code, or receiving the identifier for the session via a Near Field Communication receiver or a short-range wireless receiver of the mobile device.

The second further example may further comprise presenting, by the mobile device to the user, an indication of an operation to be performed in the session between the computing device and the service provider server; and receiving, by the mobile device from the user, confirmation to proceed, wherein the identifier for the session and the credential is not sent unless confirmation to proceed is received by the mobile device.

The sending, by the mobile device to the service provider server, the identifier for the session and a credential embodying an anonymised user identifier may comprise: sending a signed data packet comprising the credential embodying the anonymised user identifier and the identifier for the session to the service provider server.

The sending, by the mobile device to the service provider server, the identifier for the session and a credential embodying an anonymised user identifier may comprise: setting up, by the mobile device with the service provider server, a secure communication channel using the credential embodying the anonymised user identifier; and sending, by the mobile device to the service provider server, the identifier for the session over the secure communication channel.

The credential may be a X.509 digital certificate.

The secure communication channel may be established under the Secure Sockets Layer protocol or the Transport Layer Security protocol.

A third further example provides a method for facilitating generation of a credential, comprising: receiving, at a service provider server from a mobile device, an instruction requesting generation of a credential for a user, wherein the request comprises information for identifying the user; generating, by the service provider server, an anonymised user identifier and storing an association between the anonymised user identifier and user data; sending, by the service provider server to a credential server, the anonymised user identifier receiving, at the service provider server from the credential server, a request identifier, wherein the request identifier is generated by the credential server in response to receiving the anonymised user identifier and wherein the credential server stores an association between the anonymised user identifier and the request identifier; and sending, by the service provider to the mobile device, the request identifier.

A fourth further example provides a method for requesting generation of a credential, comprising: sending, by a mobile device to a service provider server, an instruction requesting generation of a credential, wherein the instruction comprises information for identifying a user; receiving, by the mobile device from the service provider server, a request identifier; sending, by the mobile device to a credential server, a data packet comprising the request identifier, wherein the data packet is digitally signed using a cryptographic key stored on the mobile device; and receiving, by the mobile device from the credential server, a credential embodying an anonymised user identifier and storing the credential on the mobile device.

The fourth further example may further comprise: creating, by the mobile device, a cryptographic key pair comprising a public key and a private key, wherein the data packet further comprises the public key and is signed using the private key.

A fifth further example provides a method for generating a credential, comprising: receiving, at a credential server from a service provider server, an anonymised user identifier; generating, by the credential server, a request identifier and temporarily storing a mapping between the request identifier and the anonymised user identifier; sending, by the credential server to the service provider server, the request identifier; receiving, at the credential server from a mobile device, a digitally signed data packet comprising the request identifier; verifying, by the credential server, the data packet and in response to successful verification, identifying a corresponding anonymised user identifier based on a stored mapping, generating a credential embodying the anonymised user identifier and sending (262) the credential to the mobile device.

Verifying the data packet may use a public key from the data packet.

Verifying the data packet may comprise: determining, by the credential server, whether the digitally signed data packet is received by the credential server within a predetermined time period following generation of the request identifier.

The fifth further example may further comprise sending, by the credential server to the service provider server, a public key received in the digitally signed data packet.

A sixth further example provides a service provider server comprising a processor and a memory arranged to store device executable instructions which when executed by the processor, cause the processor to: generate, in response to receiving an instruction requesting generation of a credential for a user from a mobile device, an anonymised user identifier, wherein the request comprises information for identifying the user; store an association between the anonymised user identifier and user data; send, to a credential server, the anonymised user identifier; and send, in response to receiving a request identifier from the credential server, the request identifier to the mobile device, wherein the request identifier is generated by the credential server in response to receiving the anonymised user identifier and wherein the credential server stores an association between the anonymised user identifier and the request identifier.

The memory may be further arranged to store device executable instructions which when executed by the processor, cause the processor to: generate, in response to receiving a request for a session from a computing device, an identifier for the session; send to the computing device, the identifier for the session; obtain, in response to receiving the identifier for the session and a credential from a mobile device, an anonymised user identifier from the credential; determine if the anonymised user identifier is associated with a user record accessible to the service provider server, and in response to determining that the anonymised user identifier is associated with a user record, authorize the session.

A seventh further example provides a credential server comprising a processor and a memory arranged to store device executable instructions which when executed by the processor, cause the processor to: generate, in response to receiving an anonymised user identifier, a request identifier; temporarily store a mapping between the request identifier and the anonymised user identifier; send the request identifier to the service provider server; verify, in response to receiving a digitally signed data packet comprising the request identifier from a mobile device, the data packet; and in response to successful verification, identify a corresponding anonymised user identifier based on a stored mapping, generate a credential embodying the anonymised user identifier and send the credential to the mobile device.

An eighth further example provides a mobile device comprising a processor and a memory arranged to store device executable instructions which when executed by the processor, cause the processor to: send to a service provider server, an instruction requesting generation of a credential, wherein the instruction comprises information for identifying a user; send, in response to receiving a request identifier from the service provider server, a data packet to a credential server, wherein the data packet comprises the request identifier and is digitally signed using a cryptographic key stored on the mobile device; and store, in response to receiving a credential embodying an anonymised user identifier from the credential server, the credential on the mobile device.

The memory may be further arranged to store device executable instructions which when executed by the processor, cause the processor to: obtain from a computing device, an identifier for a session to be established between the computing device and a service provider server; determine, in response to receiving activation information from a user, if the received activation information matches pre-recorded activation information available to the mobile device; and in response to determining that the received activation information matches the pre-recorded activation information, send to the service provider server, the identifier for the session and a credential embodying an anonymised user identifier.

A ninth further example provides a system comprising the service provider server of the sixth further example and the credential server of the seventh further example,

A tenth further example provides the system of the ninth further example, further comprising the mobile device of the eighth further example.

An eleventh further example provides a computer program comprising computer program code means adapted to perform the method according to the first further example, the second further example, the third further example, the fourth further example, or the fifth further example when the program is run on a computer.

## Claims

1. A method for authentication, comprising:
receiving (310), at a service provider server from a computing device, a request for a session;
generating (320), at the service provider server, an identifier for the session;
sending (322), by the service provider server to the computing device, the identifier for the session;
receiving (362), at the service provider server from a mobile device, a credential embodying an anonymised user identifier and the identifier for the session;
obtaining (370), by the service provider server, the anonymised user identifier from the credential;
determining (380), by the service provider server, if the anonymised user identifier is associated with a user record accessible to the service provider server, and
authorizing (390), by the service provider server, the session, in response to determining that the anonymised user identifier is associated with a user record.

2. The method according to claim 1, wherein the session that is authorized is linked to the user record.

3. The method according to claim 1 or 2, wherein said request for a session comprises at least one of a request for provision of data, a request for logging into an account, a request for opening a webpage, and a request for using an application or service provided by the service provider server.

4. The method according to any of claims 1-3, wherein said determining if the anonymised user identifier is associated with a user record accessible to the service provider server comprises determining, by the service provider server, if the anonymised user identifier is associated with a user account, a record of the mobile device and/or a cryptography key generated by the mobile device.

5. The method according to any of claims 1-4, further comprising:
determining, by the service provider server, a location of the mobile device; and
said step of authorizing the session is only performed by the service provider server, if it is determined that the location of the mobile device meets at least one predetermined condition; and
optionally, wherein said at least one predetermined condition comprises at least one of the location of the mobile device being the same as the location of the computing device and the location of the mobile device being within a designated area.

6. The method according to any of claims 1-5, wherein receiving, at the service provider server from a mobile device, a credential embodying an anonymised user identifier and the identifier for the session comprises:
receiving, at the service provider server from a mobile device, a signed data packet comprising the credential embodying the anonymised user identifier and the identifier for the session.

7. The method according to claim 6, further comprising:
verifying the data packet using a stored cryptographic key associated with the anonymised user identifier.

8. The method according to any of claims 1-5, wherein receiving, at the service provider server from a mobile device, a credential embodying an anonymised user identifier and the identifier for the session comprises:
setting up, by the service provider with the mobile device, a secure communication channel using the credential embodying the anonymised user identifier; and
receiving, by the service provider server from the mobile device, the identifier for the session over the secure communication channel; and.
optionally, wherein the secure communication channel is established under the Secure Sockets Layer protocol or the Transport Layer Security protocol.

9. The method according to any preceding claim, further comprising:
receiving (210), at the service provider server from a mobile device, an instruction requesting generation of a credential for a user, wherein the request comprises information for identifying the user;
generating (220), by the service provider server, an anonymised user identifier and storing an association between the anonymised user identifier and user data;
sending (222), by the service provider server to a credential server, the anonymised user identifier;
receiving (232), at the service provider server from the credential server, a request identifier, wherein the request identifier is generated by the credential server in response to receiving the anonymised user identifier and wherein the credential server stores an association between the anonymised user identifier and the request identifier; and
sending (240), by the service provider to the mobile device, the request identifier.

10. A method for authentication, comprising:
obtaining (331), by a mobile device from a computing device, an identifier for a session to be established between the computing device and a service provider server;
receiving activation information from a user (350);
determining, by the mobile device, if the received activation information matches pre-recorded activation information available to the mobile device; and
in response to determining that the received activation information matches the pre-recorded activation information, sending (362), by the mobile device to the service provider server, the identifier for the session and a credential embodying an anonymised user identifier.

11. The method according to claim 10, wherein said obtaining by the mobile device an identifier for a session comprises:
capturing, by a camera of the mobile device, a visual code displayed by the computing device, and obtaining, by the mobile device, the identifier for the session from the visual code, or
receiving the identifier for the session via a Near Field Communication receiver or a short-range wireless receiver of the mobile device.

12. The method according to claim 10 or 11, further comprising:
presenting, by the mobile device to the user, an indication of an operation to be performed in the session between the computing device and the service provider server; and
receiving, by the mobile device from the user, confirmation to proceed,
wherein the identifier for the session and the credential is not sent unless confirmation to proceed is received by the mobile device.

13. The method of any of the preceding claims, wherein the credential is a X.509 digital certificate.

14. A service provider server comprising a processor and a memory arranged to store device executable instructions which when executed by the processor, cause the processor to:
generate, in response to receiving a request for a session from a computing device, an identifier for the session;
send to the computing device, the identifier for the session;
obtain, in response to receiving the identifier for the session and a credential from a mobile device, an anonymised user identifier from the credential;
determine if the anonymised user identifier is associated with a user record accessible to the service provider server, and
in response to determining that the anonymised user identifier is associated with a user record, authorize the session.

15. A storage medium comprising a computer program comprising computer program code means adapted to perform the method according to any of claims 1-13 when the program is run on a computer.
